# EUROPEAN PATENT SPECIFICATION

(11) **EP 3 114 319 B1**
(45) Date of publication and mention of the grant of the patent: **22.05.2019**
(21) Application number: 15711265.7
(22) Date of filing: 06.02.2015
(51) Int. Cl.: F02B 53/08, F01C 1/32, F01C 1/356

(54) **DESMODROMIC ENDOTHERMIC ROTARY ENGINE WITH EXTERNAL COMBUSTION CHAMBER AT VARIABLE VOLUME**
DESMODROMISCHE ENDOTHERME DREHMASCHINE MIT EXTERNER BRENNKAMMER MIT VARIABLEM VOLUMEN
MOTEUR ROTATIF ENDOTHERMIQUE DESMODROMIQUE À CHAMBRE DE COMBUSTION EXTERNE À VOLUME VARIABLE

(30) Priority: 18.02.2014 GB 201402860
(43) Date of publication of application: 11.01.2017
(73) Proprietor: Tulino Research & Partners Ltd., Stratford-upon-Avon, Warwickshire CV37 6AH (GB); Tulino, Rosario Rocco, London SW6 1SX (GB)
(72) Inventor: TULINO, Rosario Rocco, London SW6 1SX (GB)
(86) International application number: PCT/GB2015/000046
(87) International publication number: WO 2015/124894

(56) References cited:
- DE-B- 1 223 988
- FR-A1- 2 487 001
- JP-A- 2001 207 859

## Description

This invention arises from a research aim to solve a motorist problems in the new aeronautic applications, because of the more growing inclination, either in civil field or military, towards the unmanned aircrafts manufacturing with high performances of endurance, high speed and ceiling altitude, better handiness.

For this kind of application it is required to have engines of smaller size compared with the ones already available in the market that endure a self technologic limit of propulsive, motoring nature.

The reciprocating engines, often known as piston engines, to obtain high ration power/weight require a supercharger and the cubic capacity splitting in order to limit the average speed of piston and consequently the allowable rpm.

The gas turbines, applied to turboprop or turbofan, also suffer of a limited speed and altitude field as they have an high thermodynamic efficiency only at high speed and high altitude with steady rotation speed. A technical limit that makes the gas turbines performances little flexible, much costly and sophisticated to manufacture and with skilled maintenance requirements that can be done only in pledged structures.

The prior art in the technical field of the present application can be find in document JP 2001 207859 A.

The desmodromic rotary engine subject of this invention, of which a prototype had been designed and produced to be used for test, similarly to the Wankel rotary engines, realizes one power stroke at every shaft round, but differently from Wankel type, it has a construction shape fundamentally different as it can be developed in length independently from the cross section and with the same cubic capacity allows a rpm increase. The introduction of this new technologic system eases the engine manufacturing, substantially reduces the manufacturing cost and the maintenance requirements supporting the production even in a small range.

In order to achieve the above-mentioned objects, an endothermic rotary engine realizing one power stroke at every shaft round comprises:
- a piston (2) with round section that rolls without sliding friction inside the circumference of a larger diameter and same length cylinder (1);
- transverse sliding vanes (4), passing through slots provided on the cylinder (1) and contacting the piston (2);
- inlet, compression, expansion and exhaust chambers formed by the transverse sliding vanes (4), the external surface of the piston (2) and the internal surface of the cylinder (1);
- slots provided longitudinally on the cylinder surface to accommodate intake and exhaust ducts (9, 10) and compression and exhaust rotating valves (7, 8);
the endothermic rotary engine characterized by further comprising:
- desmodromic tracks (6) controlled in both the vanes sliding directions;
- a combustion chamber at variable volume (11), located outside the cylinder, that along with the rotating valves (7, 8) allows a combustion at steady volume;
- two equal toothed wheels (17), one secured on a driving shaft and the other one keyed on the axis of one of the rotating valves, connected by a chain drive (18), to grant the right movement and the related phase of the two valves (7, 8);
- two eccentric mechanisms (5, 15), the first eccentric mechanism (5) located inside the cylinder (1) and supporting the piston (2), the second eccentric mechanism (15) located externally the cylinder (1) and in parallel to the first.

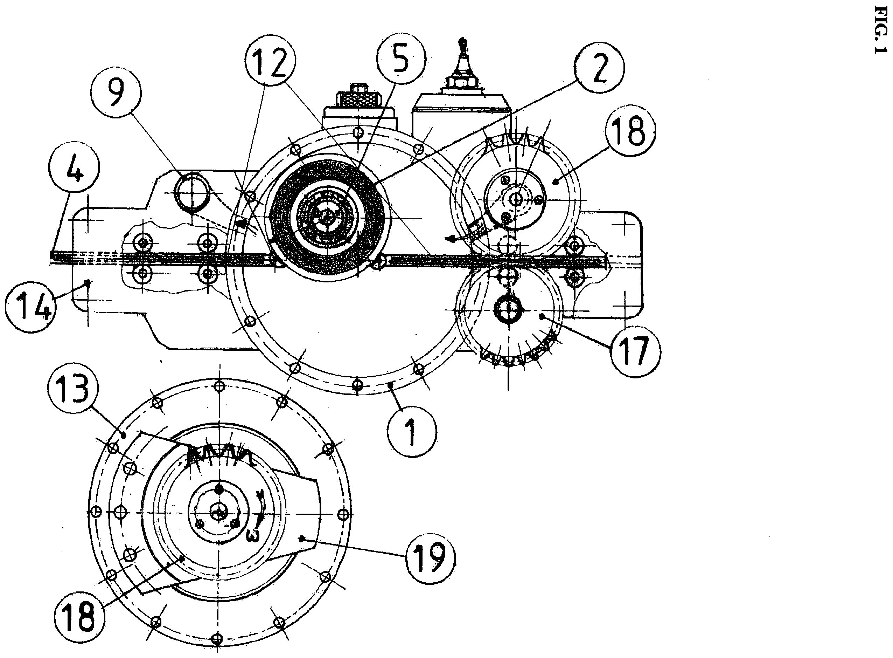

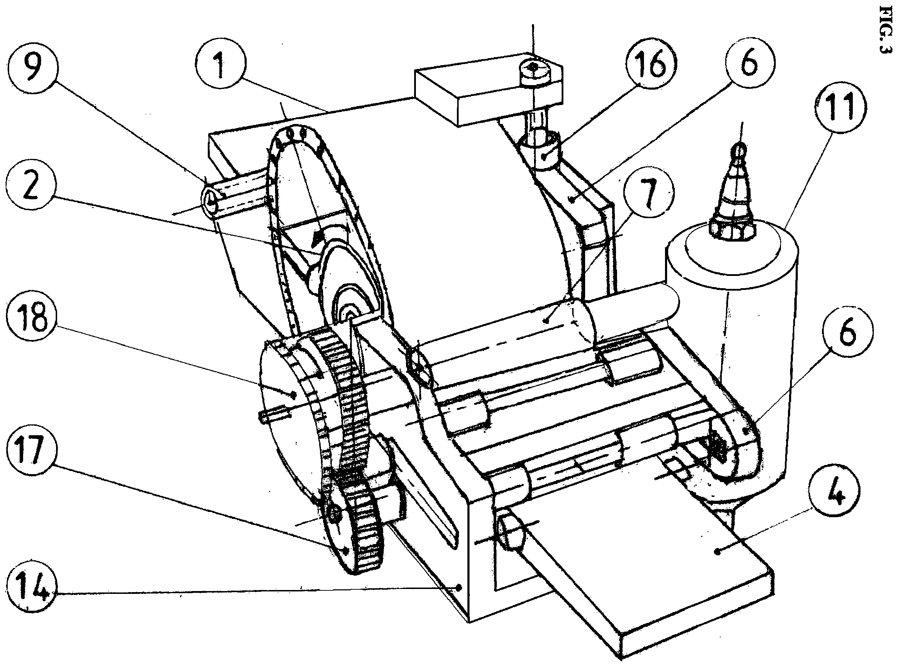

The desmodromic rotary engine has a piston with a round section that rolls, with very low sliding friction, inside the circumference of a larger diameter and same length cylinder, characterized by the adoption of an external combustion chamber at variable volume. That it is possible using an eccentric located on the seats placed on the top of the cylinder (ref. 2 - Fig. 1 / Fig 3 / Fig. 5). This systems allows a proper engine operation and consequently the engine can be produced using traditional machines tool. With such configuration it is possible to obtain thousandth tolerances regard to diameters, even on piston and cylinder high lengths; a solution very difficult to achieve with Wankel engines where the cylinder trochoid profile with cylinder pseudo triangular does not allow a tight tolerance on great engine length develop and consequently the manufacturing, surely more complicated, can be realized only using machines tool high sophisticated.

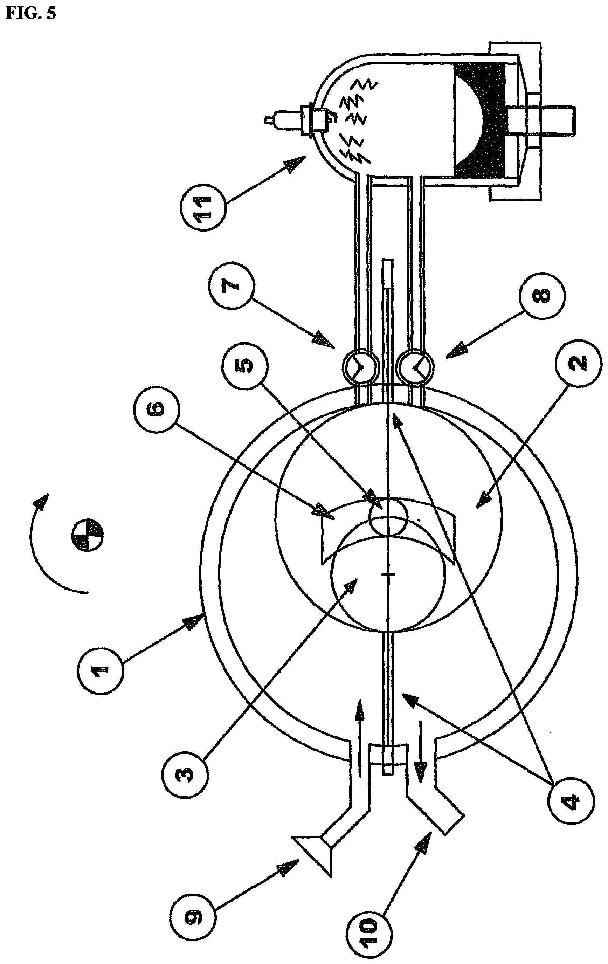

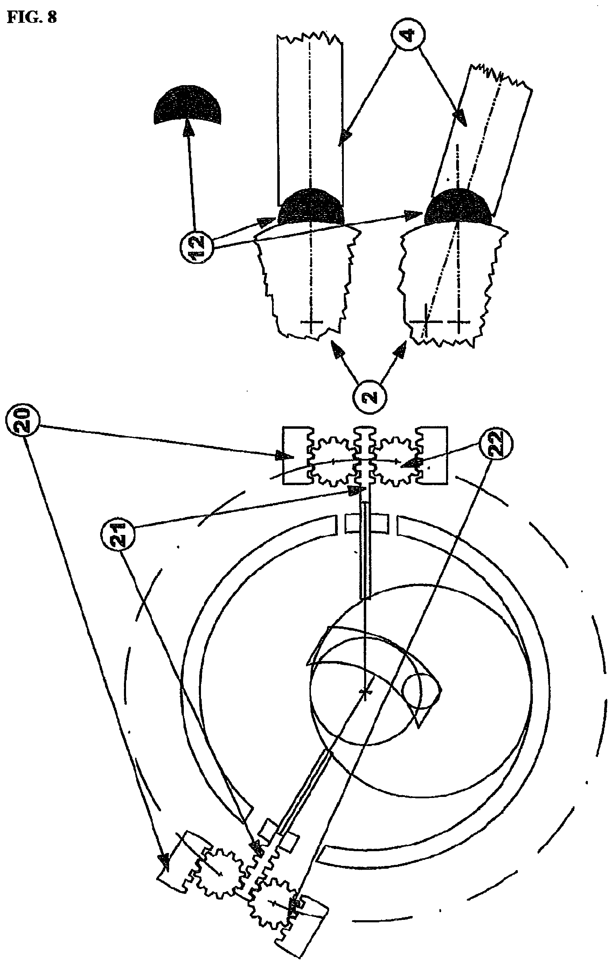

Here are explained the technologic convenience of the desmodromic rotary engine which has high benefits if particularly utilized in the modern aviation applications.
1) Remarkable increase of engine life due to the absence of sliding friction between piston and cylinder (rolling friction instead of kinetic friction), a solution that considerably reduces the wear of the pieces giving advantage to their life.
2) High allowable limit rotation speed due to lack of kinetic friction. The local superheating in the contact zone is notably lower due to the greater surface of thermic exchange because the heat is distributed onto the total surface of piston and cylinder.
3) Excellent gastight in the contact zone achieved with the application of a compression preloading carried out during the assembling which is realized through a slight interference between the eccentric that support the piston and the piston (ref. 5 - Fig. 1 / Fig. 5). The compression preloading slightly increase the braking couple because it is generated only by the rolling friction and not by the kinetic friction.
4) The resulting pertinent motion between piston and slippers (Ref. 12 - Fig. 1 / Fig. 8) allows to reduce the contact angles with the advantage of a greater eccentricity of the engine, and consequently the piston minimum diameter can be roughly reduced up to 50% of the cylinder diameter thus increasing the air sucked at every round, boosting in such way the cubic capacity with the same cylinder diameter (Ref. 4 - Fig. 1 / Fig. 2 / Fig. 3 / Fig. 4 - Fig. 5 / Fig. 8).

The existing rotary engines, even with a similar structure (a round piston that rolls inside the circumference of a cylinder of larger diameter and same length) don't have an external combustion chamber at variable volume, nor a chain drive.

The invention subject of the present application presents both these two features, which allow the invention to be used in aeronautical applications and with different fuel types.

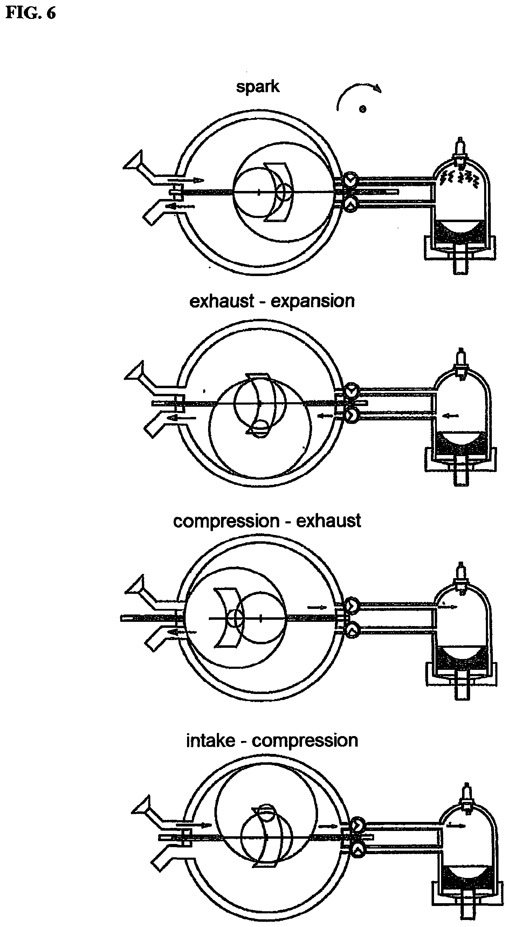

The other essential components inside the engine are the transverse sliding vanes to which ends are hinged the piston contact slippers; the sliding vanes trajectory intersects with the centre of the cylinder circumference for any position of sliding eyelets in respect to circumference. The mobile segments carry out the function of formation of inlet, compression, expansion and exhaust chambers allowing, during the rotation, the right phases sequence (Fig. 6 / Fig. 8).

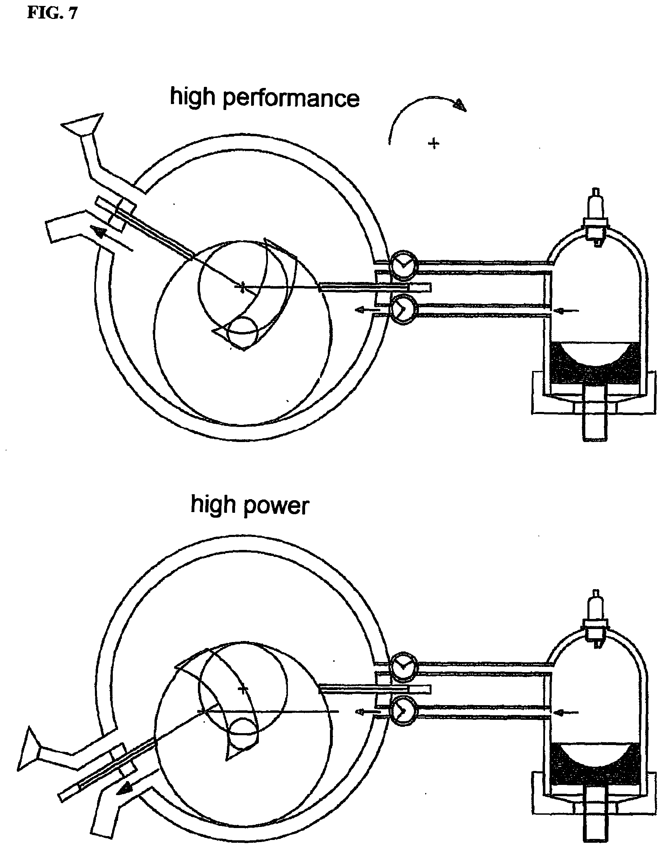

The convenience to design the position of the two transverse sliding vanes with any reciprocal angle, compatibly with the thickness encumbrances and the mechanisms, is a factor of fundamental importance because in function to the requested performances of the application shall be possible choice if bring out the engine efficiency or the specific power. In such way the compression and expansion cycles are not coerced between the equal volumes as happens with rotating engine type Wankel and with reciprocating engines (Otto cycle or diesel) but such cycles can be also considerably different (Fig. 7).

From the simulations carried out on the engine coupled with a supercharger operating at high altitude (8.000 - 18.000 meters) it has been verified that with an expansion volume double than the compressed volume it is possible to obtain a thermodynamic efficiency of approximately 50%, a value higher also that one of the more modern aeronautic turbines.

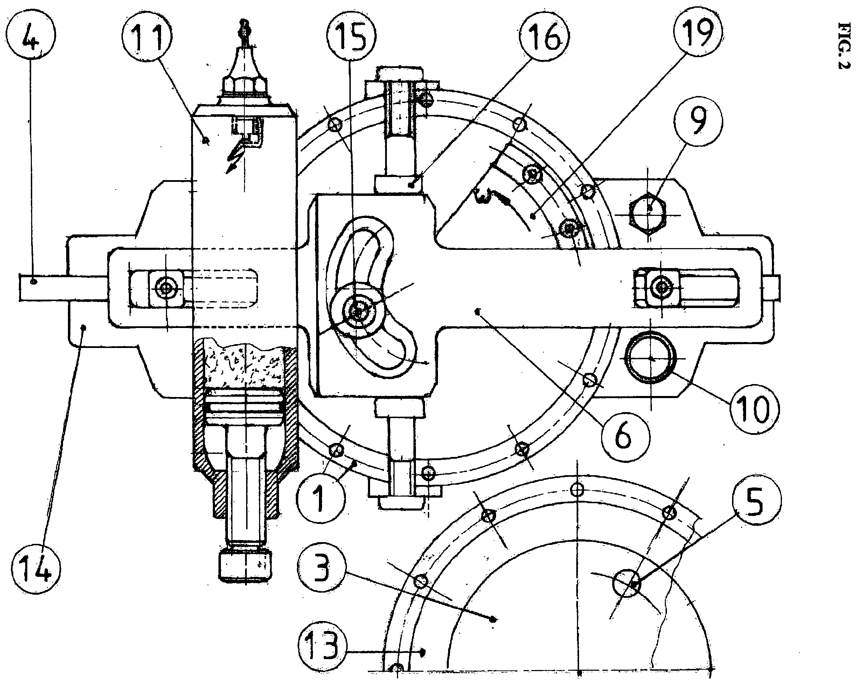

In the testing simulator the sliding vanes (Ref. 4 - Fig. 1), in order to simplify, are made with the support located externally while in the future large production the sliding vanes will be realized partially on the seats (Ref. 13 - Fig. 1 / Fig. 2) and partially on the external supports (Ref. 14 - Fig. 1 / Fig. 2 / Fig. 3 /Fig. 4) in such way we reduce the lateral dimension of the engine. The geometry of the guide keyways and the particular configuration of the contact sliders are designed to assure a better gas tightness between the mobile segments, the sliders and the piston in any position of the round angle. The gas tightness is practically obtained on two portions of the slider cylindrical surfaces, one developed on piston circumference and the other one on the semicircle diameter alike to mobile segments thickness. In order to make more precise the mobile segments motion in confront of rotating piston, it has been chosen a desmodronic mechanism external to the cylinder that grants a suitable tolerance between segments, sliders and piston, keeping steady kinetic friction of the sliders on piston independently from the engine rpm.

In the Wankel engines, instead, the gas tightness is obtained through a segment that slides on a rounded track which indeed is the tightness line. In the reciprocating engine the friction between piston and cylinder increases with square of rpm making un limit to the sliding maximum speed beyond which there is the risk of engine seizing.

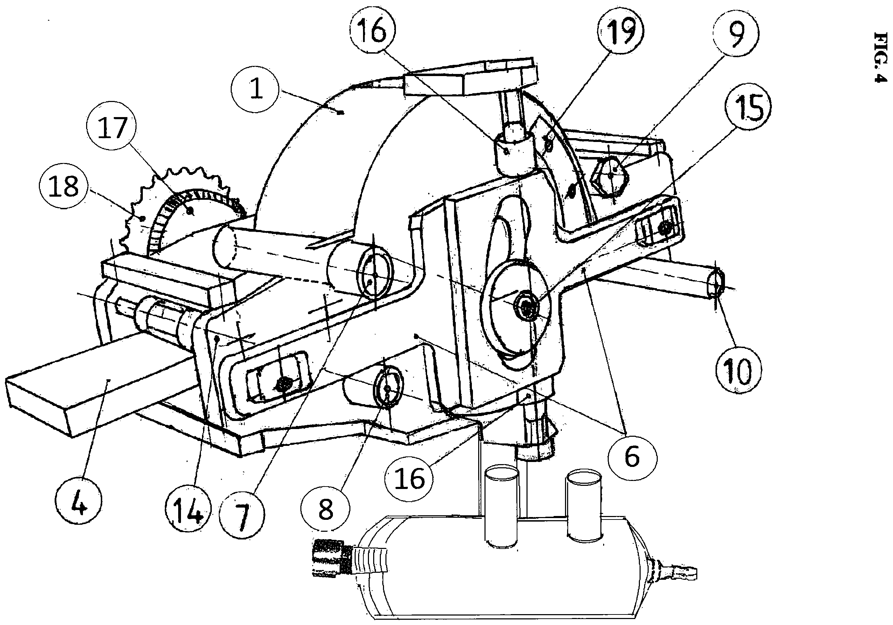

With the desmodromic rotary engine we have solved the engine seizing at high speeds, moving the stress of rocking nature outside the cylinder using an eccentric located externally and in parallel to the one inside the cylinder; with a base inside the desmodronic track bounds to the sliding vanes (Ref. 15 - Fig. 2 / Fig. 4). Between the two desmodronic tracks are interject two bearings in order that the stress produce a rolling friction on the external rollers that can be easily oversized. Consequently there is a low energy dissipation even at high rpm (Ref. 6 - Fig. 2 / Fig. 4).

The "desmodromic" term (from the Greek **desmos** ***δεσµó**ς*: bond, and **dromos *δρóµoς***:track) has been used to define the precise kinematic with track bond controlled in both the sliding directions. The desmodromic tracks have a profile at round sector with profile medium radius equal to rotating piston radius. This profile is necessary in order to have an excursion of the distance from slider to slider during the rotation, from a maximum equal to the piston diameter to a minimum in function of the design eccentricity. The right operation of the desmodromic kinematism requires that the tracks concavities being opposite similarly to the sliding vanes which are to them bound. The desmodromic tracks are also themselves bound to the cylinder by two supports with bushings that facilitate the sliding of the tracks themselves (Ref. 16 - Fig. 2 / Fig. 3 / Fig. 4).

To allow the four mixed phases: ignition, exhaust-expansion, compression-exhaust, intake-compression (Fig. 4) it has been necessary the introduction of four slots made longitudinally to the cylinder e located near the transversal sliding vanes in order to limit the formation of air volumes that will create, by blow-by, the power dispersion and will limit the cubic capacity maximization.

The slots are located in couple, a manner to have every prism between them, corresponding to compression valve, to exhaust valve, to intake and exhaust ducts respectively, as shown in the engine layout (Fig. 5 / Fig. 7 / Fig. 8 / Fig. 9 / Fig. 10).

In case the engine is not coupled with a supercharger it will be possible to put inside the intake duct a check valve, lamellar type, suitable to avoid the partial back air volume already sucked before the piston transit in front of slot. In Fig. 3, Fig. 4 and also in layout of Fig.5 it can be noted that there it has been provided on the other slots two rotating valve along the total engine length (Ref. 7 - Ref. 8).

The function of the rotating valves is to provide the compression and the expansion in respect to the combustion chamber located outside the cylinder. The choice of this type of valve has been directed by the fact that they allow a very high rpm, they have not wear and their geometry allows the possibility of developing in length with the advantage of a more easy configuration that simplify the engine construction. Furthermore with the addition of two equal gearings located on the pertaining axis, this type of valve are more synchronizing between them. The gearings are designed to engage between themselves with the same valve axle spacing (Ref. 17 - Fig. 1 / Fig. 3 / Fig.4).

The combustion chamber located outside the cylinder, along with the synchronized valves, allow a combustion at steady volume, very closed to the ideal thermodynamic cycles. In this manner there is a very high temperatures increase at combustion end, both in the Otto cycle or in the diesel cycle, thus obtaining a clear efficiencies improvement. The combustion is enhanced because the fuel ignition or the fuel injection takes place at compression valve closure, after the piston transit on the compression valve related slot, as it happens in a steady volume till the expansion valve reopening and after the piston transit on the expansion valve related slot.

The most important innovation compared with engines with a similar structure existing in the prior art, is the combustion chamber, located outside, that easily allows the possibility to provide systems controlling the volume variation during engine running and it can be designed with a suitable geometry referred to the fuel type, allowing in such way the temperature control (Ref. 11 - Fig. 2 / Fig. 4 / Fig. 5). The combustion chamber at volume variable is of essential substance for the engine utilization in aeronautical applications since at very high altitude it allows to keep steady the combustion conditions even at very low pressures and at the temperatures of sucked air. To grant the right movement and the related phase of the two valves, unlike other existing rotary engines, it has been adopted a chain drive located between a toothed wheel secured on the driving shaft and a toothed wheel keyed on the axis of one of the rotating valves (Ref. 18 - Fig. 1 / Fig. 3 /Fig. 4). To improve the piston balance there is the adoption of two masses located outside of their related seats, both keyed on the driving shaft (Ref. 19 - Fig. 1 / Fig. 2 /Fig. 4). The possible balance of the two cross sliding vanes, which depends form the vibration level of the engine, is demanded to a system with two equal masses (Ref. 20 - Fig. 8) located in parallel with the vanes and moved to opposite direction regard the vanes themselves motion by means of two racks (Ref. 21 - Fig. 8), respectively keyed on mass and vane with one or more idle toothed wheels (Ref. 22 - Fig. 8), interjected between themselves and bound to vanes seats (Ref. 14 - Fig. 1 / Fig. 2 / Fig. 3 / Fig. 4). With type of kinematic system on the oscillatory motion of vanes the engine vibrations, generated by inertial forces, are totally and very well eliminated. The oscillations absence is another reason that suggest the use of this engine in aeronautical field, especially on aircrafts with sensitive flight instruments, surely susceptible to vibrations.

The engine designed in such way, for the way the phases act and for the specific possibility to modify the compression ratio through the compression chamber volume variation, is especially suitable to be couple with a supercharger, while in the traditional reciprocating engine the adoption of a supercharger requires to reduce the compression ratio in order to avoid the gasoline detonation and for the diesel engine the adoption of supercharger will generate an excessive compression. The supercharger impossibility to reach the continuous rate generates a high lowering of thermodynamic efficiencies at low rpm, in addition the pressure drop for the excessive turbulence that is generated around the valves provoke the outbreak of sonic events inside the intake duct.

The desmodromic rotary engine subject of this invention has not restrictions on coupling with supercharger because, changing the compression ratio according to rpm and the pressure and temperature conditions inside the supercharger, we get a good regularity in thermodynamic efficiencies.

The exhaust duct without interject valves grants low pressure losses and consequently a better supercharger efficiency. The particular way of the phases succession allow the total filling of the cubic capacity because during the exhaust-expansion phase (Fig. 6) the supercharger has a higher time for increasing the pressure till the reaching of maximum limit, about the double compared to a traditional reciprocating engine of same cubic capacity, working at the same rpm. These motorist expedients and the optimal ratio Power/Weight originate a factor of fundamental importance for the applications of the desmodromic rotary engine subject of this invention in aeronautical field.

From calculations made during the design stage e from data obtained during test carried out on engine prototype we have observed ration 4 KW/KG and we can reach 15 KW/KG in models supercharged and with high rpm. These results are not matched even by the most sophisticated reciprocating engines that can reach a ratio of 1,5 2 KW/KG.

In the turbine engine the ratio power/weight is between 3 and 5 KW/KG (including weight of reducers and propeller included). In the turbofan engines the ratio power/weight is between 10 and 16 KW/KG (fan included) and it is in function of bypass ratio, in other words the ratio air fan/air developed inside the reactor. It is necessary to point out that the speed of the flow exiting the turbofan that is suitable for the applications in subsonic field require bypass ration between 2 and 4 (10 - 12 KW/KG). at lower ration we are in transonic applications with bypass 0,5-1 and ration power/weight between 12 and 16 KW/KG. These data confirm that the desmodromic rotary engine subject of this invention is suitable, in optimal way, with good propulsive efficiencies, to be keyed on directly (in other words without a reducer) on prop fan that are similar to fan not intubated but of smaller diameter compared to traditional propellers, allowing to reach cruise speed of 600-800 KM/HOUR, with power between 10 and 1000 KW.

It is possible to finish saying that the desmodromic rotary engine subject of this invention, designed to solve the problems ratio power/weight, developed in length with a reduced cross dimension, is for some aeronautical applications surely competitive versus turbojet, a frontier that cannot be overtaken by the tradition reciprocating engines.

## Claims

1. An endothermic rotary engine realizing one power stroke at every shaft round comprising:
- a piston (2) with round section that rolls without sliding friction inside the circumference of a larger diameter and same length cylinder (1);
- transverse sliding vanes (4), passing through slots provided on the cylinder (1) and contacting the piston (2);
- inlet, compression, expansion and exhaust chambers formed by the transverse sliding vanes (4), the external surface of the piston (2) and the internal surface of the cylinder (1);
- slots provided longitudinally on the cylinder surface to accommodate intake and exhaust ducts (9, 10) and compression and exhaust rotating valves (7, 8);
the endothermic rotary engine **characterized by** further comprising:
- desmodromic tracks (6) controlled in both the vanes sliding directions;
- a combustion chamber at variable volume (11), located outside the cylinder, that along with the rotating valves (7, 8) allows a combustion at steady volume;
- two equal toothed wheels (17), one secured on a driving shaft and the other one keyed on the axis of one of the rotating valves, connected by a chain drive (18), to grant the right movement and the related phase of the two valves (7, 8);
- two eccentric mechanisms (5, 15), the first eccentric mechanism (5) located inside the cylinder (1) and supporting the piston (2), the second eccentric mechanism (15) located externally the cylinder (1), in parallel to the first and with a base inside the desmodronic tracks (6).

2. The endothermic rotary engine according to claim 1, wherein the sliding slots accommodating the transverse sliding vanes (4) are two and can take any reciprocal angle along the cylinder circumference.

3. The endothermic rotary engine according to claim 1, wherein to the ends of the transverse sliding vanes (4) are hinged piston contact slippers (12) and the transverse sliding vanes (4) have a sliding trajectory that intersects with the centre of the cylinder circumference for any position of the sliding slots in respect to circumference.

4. The endothermic rotary engine according to claim 1, wherein the sliding vanes support is partially on two seats located at cylinder end and partially on external supports.

5. The endothermic rotary engine according to claim 1, wherein each desmodromic track (6) has a profile with a concavity facing in opposite direction to the sliding vanes (4) it is bound to.

6. The endothermic rotary engine according to claim 1, wherein a foot of the eccentric mechanism, is inside both desmodromic tracks.

7. The endothermic rotary engine according to claim 5, wherein the profile of the desmodromic tracks is at round sector with profile medium radius equal to rotating piston radius.

8. The endothermic rotary engine according to claim 1, wherein the two rotating valves (7, 8) have the function of compression or expansion valves according to the rotating direction of the driving shaft.

9. The endothermic rotary engine according to claim 1, wherein the intake and exhaust ducts (9, 10) are provided without valves to allow a reversible function of the engine according to the rotating direction of the driving shaft.

10. The endothermic rotary engine according to claim 1, wherein the external combustion chamber is in communication with ducts of rotating valves.

11. The endothermic rotary engine according to claim 1, wherein the two equal toothed wheels (17) are located on the related axis of the rotating valves (7, 8), have the same centre to centre distance and engage between themselves.

12. The endothermic rotary engine according to claim 4, further comprising two balancing masses regarding the rotating piston, located outside the two seats and keyed on driving shaft.

13. The endothermic rotary engine according to claim 1, further comprising two balancing masses inside the related cross sliding vanes, moved to opposite direction regard the vanes motion through the utilization of a mechanism composed by two racks respectively keyed on the mass and on the vane, with one or more idle toothed wheels, bound to supports and that engage on both the racks.

14. The endothermic rotary engine according to claim 9, wherein in order to obtain a superpower when applied to turbofans, is **characterized by** the adoption of a supercharger between the intake and exhaust ducts.

## Patentansprüche

1. Ein endothermer Rotationsmotor, der einen Krafthub an jeder Wellenumdrehung ausführt, umfassend:
- einen Kolben (2) mit rundem Querschnitt, der ohne Gleitreibung innerhalb des Umfangs eines Zylinders (1) mit einem größerem Durchmesser und gleicher Länge rollt;
- Gleitenden Quer-Flügeln (4) dringenden durch Schlitze, die an dem Zylinder (1) vorgesehen sind, und die den Kolben (2) berühren;
- Einlass-, Kompressions-, Expansions- und Auslasskammern, die durch die gleitenden Quer-Flügeln (4), die Außenfläche des Kolbens (2) und die innere Oberfläche des Zylinders (1) gebildet werden;
- Schlitze, die in Längsrichtung an der Zylinderoberfläche vorgesehen sind, um Einlass- und Auslasskanäle (9, 10) und Verdichtungs- und Auslassdrehventile (7, 8) aufzunehmen;
Wobei der endotherme Rotationsmotor **dadurch gekennzeichnet ist, dass** es weiter umfasst:
- desmodromische Gleise (6), die in beide Gleitrichtungen der Flügel gesteuert werden;
- eine außerhalb des Zylinders angeordnete Brennkammer mit variabel Volumen (11), die zusammen mit den rotierenden Ventilen (7, 8) eine Verbrennung bei gleichbleibendem Volumen ermöglicht;
- zwei Zahnräder (17), von denen ein an einer Antriebswelle befestigt ist und das andere an der Achse eines der Drehventile befestigt ist, die durch einen Kettenantrieb (18) verbunden sind, um die richtige Bewegung und die zugehörige Phase der beiden Ventile zu gewährleisten (7, 8);
- zwei Exzentermechanismen (5, 15), wobei der erste Exzentermechanismus (5) innerhalb des Zylinders (1) angeordnet ist und den Kolben (2) stützt, und der zweite Exzentermechanismus (15) außerhalb des Zylinders (1), parallel zum ersten und mit einem Fuß innerhalb der desmodromischen Gleisen (6).

2. Endothermer Rotationsmotor nach Anspruch 1, wobei die Gleitschlitze, die die Quer-Flügeln (4) aufnehmen, zwei sind und einen beliebigen Winkel entlang des Zylinderumfangs annehmen können.

3. Endothermer Rotationsmotor nach Anspruch 1, bei dem an den Enden der Quer-Flügeln (4) klappbare Kolbenkontaktschuhe (12) angeordnet sind und die Quer-Flügeln (4) eine Gleitbahn aufweisen, die sich mit der Mitte des Drehrades Zylinderumfang für jeder Position der Gleitschlitze in Bezug auf den Umfang schneidet.

4. Endothermer Rotationsmotor nach Anspruch 1, wobei die Quer-flügelnhalterung teilweise auf zwei am Zylinderende angeordneten Sitzen und teilweise auf äußeren Stützen befindet.

5. Endothermer Rotationsmotor nach Anspruch 1, wobei jede desmodromische Spur (6) aufweist ein Profil mit einer Konkavität, die den Gleitschaufeln (4) entgegengesetzt ist, an die es gebunden ist.

6. Endothermer Rotationsmotor nach Anspruch 1, wobei ein Fuß des Exzentermechanismus innerhalb beider desmodromischen Spuren sich befindet.

7. Endothermer Rotationsmotor nach Anspruch 5, wobei das Profil der desmodromischen Spuren in einem runden Sektor mit Profilmedium Radius gleich dem Drehkolbenradius ist.

8. Endothermer Rotationsmotor nach Anspruch 1, wobei die zwei Drehventilen (7,8) die Funktion von Kompressions- und Expansionsventilen gemäß der Drehrichtung der Antriebswelle haben.

9. Endothermer Rotationsmotor nach Anspruch 1, wobei die zwei Auslass-und Einlass Kanälen(9,10) ohne Ventil sind, um die umkehrbare Funktion des Motors gemäß der Drehrichtung der Antriebswelle zu erhalten .

10. Endothermer Rotationsmotor nach Anspruch 1, wobei die äußere Verbrennungskammer in Verbindung mit Kanälen von rotierenden Ventilen steht.

11. Endothermer Rotationsmotor nach Anspruch 1, bei dem die zwei gleichen Zahnräder (17) auf der zugehörigen Achse der rotierenden Ventilen (7, 8) angeordnet sind und den gleichen Abstand von Mitte zu Mitte haben und engagieren sich untereinander.

12. Endothermer Rotationsmotor nach Anspruch 4, wobei zwei Auswuchtmassen bezüglich des Rotationskolbens außerhalb der zwei Sitze angeordnet und auf der Antriebswelle verkeilt sind.

13. Endothermer Rotationsmotor nach Anspruch 1, umfassend die zwei Auswuchtmassen innerhalb der zugehörigen Kreuz-Gleitschaufeln, die in entgegengesetzter Richtung um die Flügelbewegung bewegt wurden, durch Verwendung eines Mechanismus zu bestimmen, der aus zwei Zahnstangen besteht, die jeweils auf der Masse und auf der Schaufel verkeilt sind, wobei ein oder mehrere leerlaufende Zahnräder an Stützen und so befestigt sind Eingriff in beide Gestelle, erfolgt.

14. Endothermer Rotationsmotor nach Anspruch 9, wobei der Einsatz eines Laders zwischen dem Einlass und dem Auslasskanal gekennzeichnet ist, um bei Turbofans eine Superkraft zu erhalten .

## Revendications

1. Un moteur rotatif endothermique réalisant une course de force à chaque tour d'arbre comprenant :
- un piston (2) de section ronde qui roule sans frottement dans la circonférence d'un cylindre de plus grand diamètre et de même longueur (1) ;
- aubes transversales coulissantes (4), en passant par les fentes prévues sur le cylindre (1) et en contact avec le piston (2) ;
- chambres d'entrée, de compression, de détente et d'échappement formées par les aubes coulissantes transversales (4), la surface externe du piston (2) et la surface interne du cylindre (1) ;
- des fentes prévues longitudinalement sur la surface du cylindre pour loger des conduits d'admission et d'échappement (9, 10) et des vannes rotatives de compression et d'échappement (7, 8) ;
le moteur rotatif endothermique étant **caractérisé en ce qu'**il comprend en outre :
- pistes desmodromiques (6) contrôlées dans les deux sens de glissement des ailettes ;
- une chambre de combustion à volume variable (11), située à l'extérieur du cylindre, permettant, avec les soupapes rotatives (7, 8), une combustion à volume constant ;
- deux égales roues dentées (17), l'une fixée sur un arbre menant et l'autre calée sur l'axe d'une des vannes rotatives, reliées par un entraînement par chaîne (18), garantissent le mouvement correct et la phase correspondante des deux vannes (7, 8) ;
- deux mécanismes excentriques (5, 15), le premier mécanisme excentrique (5) situé à l'intérieur du cylindre (1) et supportant le piston (2), le deuxième mécanisme excentrique (15) situé à l'extérieur du cylindre (1) et en parallèle au premier et avec une base à l'intérieur des pistes desmodromiques (6).

2. Moteur rotatif endothermique selon la revendication 1, dans lequel les fentes coulissantes recevant les aubes coulissantes transversales (4) sont au nombre de deux et peuvent prendre n'importe quel angle alternatif le long de la circonférence du cylindre.

3. Moteur rotatif endothermique selon la revendication 1, **caractérisé en ce que** des pantoufles (12) articulées de contact de piston (12) sont articulées sur les extrémités des aubes coulissantes transversales (4) et que les aubes transversales (4) ont une trajectoire de glissement qui croise le centre du la circonférence du cylindre pour n'importe quelle position des fentes coulissantes par rapport à la circonférence.

4. Moteur rotatif endothermique selon la revendication 1, dans lequel le support d'aubes coulissantes repose partiellement sur deux sièges situés à l'extrémité du cylindre et partiellement sur des supports externes.

5. Moteur rotatif endothermique selon la revendication 1, dans lequel chaque piste desmodromique (6) a un profil avec une concavité dans le sens opposé aux aubes coulissantes (4) auxquels elle est liée.

6. Moteur rotatif endothermique selon la revendication 1, dans lequel un pied du mécanisme excentrique est situé à l'intérieur des deux pistes desmodromiques.

7. Moteur rotatif endothermique selon la revendication 5, dans lequel le profil des pistes desmodromiques est à secteur rond avec un milieu profilé rayon égal au rayon du piston rotatif.

8. Moteur rotatif endothermique selon la revendication 1, dans lequel les deux vannes rotatives (7,8) ont la fonction de vannes de compression ou de détente selon le sens de rotation de l'arbre menant.

9. Moteur rotatif endothermique selon la revendication 1, dans lequel les deux conduits d'échappement et d'admission (9,10) sont sans soupapes pour réaliser la fonction réversible du moteur selon le sens de rotation de l'arbre menant.

10. Moteur rotatif endothermique selon la revendication 1, dans lequel la chambre de combustion externe est en communication avec des conduits de vannes rotatives.

11. Moteur rotatif endothermique selon la revendication 1, dans lequel les deux roues dentées égales (17) sont situées sur l'axe correspondant des vannes rotatives (7, 8), ont le même entraxe et s'engager entre eux.

12. Moteur rotatif endothermique selon la revendication 4, comprenant encore deux masses d'équilibrage concernant le piston rotatif, situé à l'extérieur des deux sièges et calée sur l'arbre d'entraînement.

13. Moteur rotatif endothermique selon la revendication 1, dans lequel comprenant encore deux masses d'équilibrage à l'intérieur des aubes coulissantes transversales associées, déplacées dans le sens opposé, considèrent le mouvement des aubes grâce à l'utilisation d'un mécanisme composé de deux crémaillères respectivement calées sur la masse et sur l'aube, avec une ou plusieurs roues dentées vides, liées aux supports et qui s'engager sur les deux crémaillères.

14. Moteur rotatif endothermique selon la revendication 9, dans lequel, pour obtenir une superpuissance lorsqu'il est appliqué à des turboréacteurs, est **caractérisé par** l'adoption d'un surpresseur entre le conduit d'admission et le conduit d'échappement.
